# EUROPEAN PATENT SPECIFICATION

(11) **EP 1 975 204 B1**
(45) Date of publication and mention of the grant of the patent: **02.10.2013**
(21) Application number: 08005815.9
(22) Date of filing: 27.03.2008
(51) Int. Cl.: C09B 29/36, C09B 29/00

(54) **Azo dye and azo compound**
Azofärbemittel und Azoverbindung
Colorant azoïque et composé azoïque

(30) Priority: 27.03.2007 JP 2007080771; 21.05.2007 JP 2007134741
(43) Date of publication of application: 01.10.2008
(73) Proprietor: FUJIFILM Corporation, Minato-ku Tokyo (JP)
(72) Inventor: Ishiwata, Yasuhiro, Minami-ashigara-shi Kanagawa 250-0193 (JP)
(74) Representative: HOFFMANN EITLE

(56) References cited:
- EP-A- 0 156 216
- DE-A1- 19 611 351
- US-A- 5 785 719
- US-A- 5 789 560
- US-A1- 2003 006 516
- DATABASE WPI Week 200569 Thomson Scientific, London, GB; AN 2005-668879 XP002528023 -& JP 2005 255868 A (FUJI PHOTO FILM CO LTD) 22 September 2005 (2005-09-22)
- ENDRE JENEY ET AL: "Chemotherapeutische Studien in der Reihe der heterozyklischen Azo-Verbindungen. II. Aryl-azo-Derivate der N1-Heterozyklyl-sulphonamide" ZENTRALBLATT FUER BAKTERIOLOGIE, PARASITENKUNDE,INFEKTIONSKRANKHEITEN UND HYGIENE. ERSTE ABTEILUNG, MEDIZINISCH-HYGIENISCHE BAKTERIOLOGIE, VIRUSFORSCHUNG UND PARASITOLOGIE.ORIGINALE, STUTTGART, DE, vol. 180, 1 January 1960 (1960-01-01), pages 96-112, XP009116811 ISSN: 0372-8110

## Description

### FIELD OF THE INVENTION

The present invention relates to a sulfur-containing/nitrogen-containins heterocyclic azo dye and azo compound. More specifically, the present invention relates to a sulfur-containing/nitrogen-containing heterocyclic azo dye and azo compound of novel structure having good hue and fastness properties and also having a high molecular extinction coefficient.

### BACKGROUND OF THE INVENTION

Conventionally, many azo dyes have various kinds of visible light absorption, and they have been used as dyes in various fields. For instance, the azo dyes have been used in various fields of synthetic-resin coloring, printing ink, dyes for thermal sublimination transfer printing materials, inkjet-ink dyes, and color-filter dyes. The significant performance demanded for azo dyes to be used as proper dyes, include absorption spectrum. The hue of a dye has much effect on the tint (shade), texture, and the like of a substance colored by the dye and thus significantly influences visual sensation. Therefore, absorption spectra of dyes have been studied for a long time.

Recently, the fields of dye application have been diversified, because color images have become the mainstream of image-recording materials. Specifically, dyes have been actively used in inkjet recording materials, thermal-transfer recording materials, electrophotographic recording materials, transfer-type silver halide photosensitive materials, printing ink, and the like. Also, the azo dyes have been used in color filters for recording and reproducing color images in imaging devices such as CCDs in imaging apparatuses and LCDs and PDPs in displays. Further, the azo dyes have been used for dyes and hair dyes. In the case of these color image recording materials and color filters, three primary-color coloring agents (dyes or pigments) are used for reproducing or recording full color images in a so-called additive color mixture method or subtractive color mixture method.

However, at present, there is no fast coloring agent having absorbing properties that realize a favorable color-reproducing region and having good color hue, while being sustainable to various usage conditions and environmental conditions. Therefore, improvements in coloring agents have been demanded in the art.

Conventionally, azo dyes including five-membered heterocyles as coupler components are disclosed in JP-A-2001-207092 ("JP-A" means unexamined published Japanese patent application) and JP-A-2001-207093, for example. However, each of those dyes does not simultaneously satisfy all the requirements for hue, fastness properties, and pKa.

JP-A-2005-255868 discloses an image-forming coloring composition containing an azo dye having a coupler of the formula 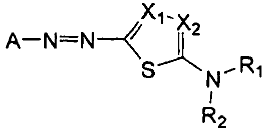 wherein A is an optionally substituted heterocycle; R₁ and R₂ each are H or an optionally substituted aliphatic, aromatic or heterocyclic group, acyl, alkoxycarbonyl, aryloxycarbonyl, carbamoyl, alkylsulfonyl, arylsulfonyl or sulfamoyl; and X₁ and X₂ are both N or one is N and the other one is optionally substituted C.

### SUMMARY OF THE INVENTION

An object of the present invention is to provide an azo dye and azo compound of novel structure which has good hue and fastness properties and also has a high molecular extinction coefficient.

As a result of intensive studies, the inventor of the present invention has found that a specific nitrogen-containing heterocyclic azo dye has good hue and good fastness properties to light and heat. Then, the inventor has completed the present invention on the basis of such a finding.

According to the present invention, there is provided an azo dye of formula (I): 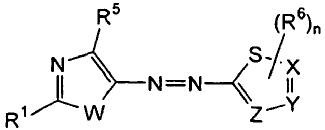 wherein
- R¹: is aliphatic sulfonyl amino, aliphatic oxy or -CH(CN)₂;
- W: is S or -N(R⁴)-, with R⁴ being a substituent;
- R⁵: is a substituent;
- X, Y, and Z: each represent an atom required for the formation of a five-membered aromatic heterocycle, where at least one of X, Y, and Z is N, and if Z is N, X and Y are not both C;
- R⁶: is H or a substituent; and
- n: is 1 or 2, and if n is 2, the two R⁶ may together form an aromatic or heteroaromatic ring.

Preferred embodiments of the invention are as defined in the dependent appended claims. nitrogen atom; and R⁶ represents a hydrogen atom or a substituent, n represents 1 or 2, and two R⁶s may be coupled together to form an aromatic ring or a heteroaromatic ring when n represents 2.

Other and further objects, features and advantages of the invention will appear more fully from the following description, appropriately referring to the accompanying drawings.

### BRIEF DESCRIPTION OF THE DRAWINGS

Fig. 1 is an absorption spectrum of a dye (Exemplified compound D-23) prepared in the working example.
Fig. 2 is an absorption spectrum of a dye (Exemplified compound D-1) prepared in the working example.
Fig. 3 is an absorption spectrum of a dye (Exemplified compound D-21) prepared in the working example.
Fig. 4 is an absorption spectrum of a dye (Exemplified compound D-15) prepared in the working example.

### DETAILED DESCRIPTION OF THE INVENTION

The present invention will be described in detail below.

The term "aliphatic group" used herein means any of aliphatic groups in which an aliphatic moiety thereof may be a linear or branched chain being saturated or unsaturated, including an alkyl group and an alkenyl group, those of which may be unsubstituted or substituted. In addition, the "aryl" may have a single ring or a condensed ring, and may be unsubstituted or substituted.

Hereinafter, the compound represented by formula (I) will be described in detail.

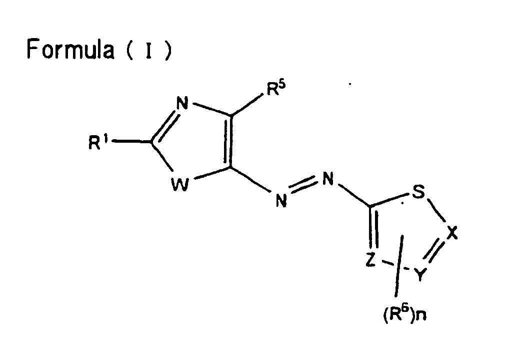

In the formula, R¹ represents an aliphatic sulfonyl amino group, an aliphatic oxy group, or - CH(CN)₂; W represents a sulfur atom or -N-(-R⁴)-; R⁴ represents a substituent; R⁵ represents a substituent; X, Y, and Z each represent an atom required for the formation of a five-membered aromatic heterocycle, where at least one atom of X, Y, and Z represents a nitrogen atom but both X and Y do not represent a carbon atom when Z represents a nitrogen atom; and R⁶ represents a hydrogen atom or a substituent, n represents 1 or 2, and two R⁶s may be coupled together to form an aromatic ring or a heteroaromatic ring when n represents 2.

Examples of substituents represented by R⁴ to R⁶ include a halogen atom, an aliphatic group, an aryl group, a cyano group, a nitro group, an aliphatic oxy group, an aryloxy group, a heterocyclic oxy group, an acyloxy group, a carbamoyloxy group, an aliphaticoxycarbonyloxy group, an aryloxycarbonyloxy group, an amino group (including an anilino group), an acylamino group, an aminocarbonylamino group, an aliphaticoxycarbonylamino group, an aryloxycarbonylamino group, a sulfamoyl amino group, an aliphatic sulfonylamino group, an aryl sulfonylamino group, an aliphatic thio group, an arylthio group, a heterocyclic thio group, a sulfamoyl group, an aliphatic sulfonyl group, an aryl sulfonyl group, an acyl group, an aliphaticoxycarbonyl group, an aryloxycarbonyl group, and a carbamoyl group.

For more detail, examples of the substituent include a halogen atom (e.g., a chlorine atom, a bromine atom, an iodine atom); an aliphatic group (a straight- or branched-chain or cyclic aliphatic group having 1 to 10 carbon atoms, preferably having 1 to 6 carbon atoms, e.g., methyl, ethyl, n-propyl, isopropyl, t-butyl, n-octyl, 2-chloroethyl, 2-cyanocthyl, 2-ethylhexyl, 2-hydroxyethyl); an aryl group (an aryl group having 6 to 12 carbon atoms, preferably having 6 to 8 carbon atoms, e.g., phenyl, p-tolyl, naphthyl, 3-chlorophenyl); a heterocyclic group (a monovalent group having 1 to 12 carbon atoms, preferably 2 to 6 carbon atoms, which is obtained by removing one hydrogen atom from a 5-membered or 6-membered aromatic or nonraomatic heterocyclic compound; e.g., 1-pyrazolyl, 1-imidazolyl, 2-furyl, 2-thienyl, 4-pyrimidinyl, 2-benzothiazolyl); a cyano group; a nitro group; an aliphatic oxy group (a straight- or branched-chain or cyclic aliphatic oxy group having 1 to 10 carbon atoms, preferably having 1 to 6 carbon atoms, e.g., methoxy, ethoxy, isopropoxy, t-butoxy, cyclopentyloxy, 2-butene-1-yl oxy, 2-metboxyethoxy); an aryloxy group (an aryloxy group having 6 to 12 carbon atoms, preferably 6 to 8 carbon atoms, e.g., phenoxy, 2-methylphenoxy, 4-t-butylphenoxy, 3-nitrophenoxy); a silyloxy group (a silyloxy group having 3 to 10 carbon atoms, preferably 3 to 6 carbon atoms, e.g., trimethylsilyloxy, t-butyldimethylsilyloxy); a heterocyclic oxy group (a heterocyclic oxy group having 1 to 12 carbon atoms, preferably having 2 to 6 carbon atoms, e.g., 1-phenyltctrazole-5-oxy, 2-tetrahydropyranyloxy); an acyloxy group (an acyloxy group having 1 to 12 carbon atoms, preferably having 1 to 8 carbon atoms, e.g., formyloxy, acetyloxy, pivaloyloxy, benzoyloxy, p-methoxyphenylcarbonytoxy); a carbamoyloxy group (a carbamoyloxy group having 1 to 10 carbon atoms, preferably having 1 to 6 carbon atoms, e.g., N,N-dimethylcarbamoyloxy, N,N-diethylcarbarnoyloxy, morpholino carbonyloxy, N,N-octylcarbamoyloxy); an aliphatic oxycarbonyloxy group (an aliphatic oxycarbonyloxy group having 2 to 10 carbon atoms, preferably 2 to 6 carbon atoms, e.g., methoxycarbonyloxy, ethoxycarbonyloxy, t-butoxy carbonyloxy, n-octyloxycarbonyloxy); an aryloxycarbonyloxy group (an aryloxycarbonyloxy group having 7 to 12 carbon atoms, preferably 7 to 10 carbon atoms, e.g., phenoxycarbonyloxy, p-methoxyphenoxycarbonyloxy); an amino group (an aliphatic amino group having 1 to 10 carbon atoms, preferably 1 to 6 carbon atoms, an anilino group having 6 to 12 carbon atoms, preferably having 6 to 8 carbon atoms, and a heterocyclic amino group having 1 to 12 carbon atoms, preferably 2 to 6 carbon atoms, e.g., amino, methylamino, dimethylamino, anilino, N-methyl-anilino, diphenylamino, imidazole-2-yl amino, pyrazole-3-yl amino), an acylamino group (an aliphatic carbonylamino group having 1 to 10 carbon atoms, preferably 1 to 6 carbon atoms, an arylcarbonylamino group having 6 to 12 carbon atoms, preferably 6 to 8 carbon atoms, a heterocyclic carbonylamino group having 2 to 12 carbon atoms, preferably 2 to 6 carbon atoms, e.g., formylamino, acctylamino, pivaloylamino, benzoylamino, pyridine-4-carbonylamino, thiophene-2-carbonylamino), an aminocarbonylamino group (an aminocarbonylamino group having 1 to 12 carbon atoms, preferably 1 to 6 carbon atoms, e.g., carbamoylamino, N,N-dimcthylaminocarbonylamino, N,N-diethylamino carbonylamino, morpholine-4-yl carbonylamino); an aliphatic oxycarbonylamino group (an aliphatic oxycarbonylamino group having 2 to 10 carbon atoms, preferably 2 to 6 carbon atoms, e.g., methoxycarbonylamino, ethoxycarbonylamino, t-butoxycarbonylamino); an aryloxycarbonylamino group (an aryloxycarbonylamino group having 7 to 12 carbon atoms, preferably 7 to 9 carbon atoms, e.g., phenoxycarbonylamino, p-chlorophenoxycarbonylamino, 4-methoxyphenoxycarbonylamino); a sulfamoyl amino group (a sulfamoylamino group having 0 to 10 carbon atoms, preferably 0 to 6 carbon atoms, e.g., sulfamoylamino, N,N-dimethylaminosulfonylamino, N-(2-hydroxyethyl)sulfamoylamino); an aliphatic sulfonylamino group (an aliphatic sulfonylamino group having 1 to 10 carbon atoms, preferably 1 to 6 carbon atoms, e.g., methylsulfonylamino, butylsulfonylamino); an arylsulfonylamino group (an arylsulfonylamino group having 6 to 12 carbon atoms, preferably 6 to 8 carbon atoms, e.g., phenylsulfonylamino, 2,3,5-trichlorophenylsulfonylamino, p-methylphenylsulfonylamino); an aliphatic thio group (an aliphatic thio group having 1 to 10 carbon atoms, preferably 1 to 6 carbon atoms, e.g., methylthio, ethylthio, butylthio), an arylthio group (an arylthio group having 6 to 12 carbon atoms, preferably 6 to 8 carbon atoms, e.g., phenylthio, p-chlorophenylthio, m-methoxyphenylthio); a heterocyclic thio group (a heterocyclic thio group having 1 to 10 carbon atoms, preferably 1 to 6 carbon atoms, e.g., 2-benzothiazolylthio, 1-phenyltetrazol-5-ylthio); a sulfamoyl group (a sulfamoyl group having 0 to 10 carbon atoms, preferably 0 to 6 carbon atoms, e.g., sulfamoyl, N-cthylsulfamoyl, N,N-dimethyl sulfamoyl, N-acctylsulfamoyl, N-benzoylsulfamoyl); an aliphatic sulfonyl group (an aliphatic sulfonyl group having 1 to 10 carbon atoms, preferably 1 to 6 carbon atoms, e.g., methylsulfonyl, ethylsulfonyl); an arylsulfonyl group (an arylsulfonyl group having 6 to 12 carbon atoms, preferably 6 to 8 carbon atoms, e.g., phenylsulfonyl, p-chlorophenylsulfonyl); an acyl group (a formyl group, an aliphatic carbonyl group having 2 to 10 carbon atoms (preferably 2 to 6 carbon atoms) and an arylcarbonyl group having 7 to 12 carbon atoms (preferably 7 to 9 carbon atom), e.g., acetyl, pivaloyl, 2-chloroacetyl, benzoyl, 2,4-dichlorobenzoyl); an aliphatic oxycarbonyl group (an aliphatic oxycarbonyl group having 2 to 10 carbon atoms, preferably 2 to 6 carbon atoms, e.g., methoxycarbonyl, ethoxycarbonyl, t-butoxycarbonyl, isobutyloxycarbonyl); an aryloxycarbonyl group (an aryloxycarbonyl group having 7 to 12 carbon atoms, preferably 7 to 9 carbon atoms, e.g., phenoxycarbonyl, 2-chlorophenoxycarbonyl, 3-nitrophenoxy carbonyl, 4-t-butylphenoxycarbonyl); a carbamoyl group (a carbamoyl group having 1 to 10 carbon atoms, preferably 1 to 6 carbon atoms, e.g., carbamoyl, N-methylcarbamoyl, N,N-dimethylcarbamoyl, N-(2-hydroxyethyl)carbamoyl, N-(methylsulfonyl)carbamoyl).

In terms of the effects of the present invention, R⁴ is preferably an aliphatic group, an acyl group, or an aryl group, more preferably an aliphatic group or an aryl group, most preferably an aliphatic group having 1 to 6 carbon atoms. Specifically, R⁴ may be a methyl group, an ethyl group, or the like.

In terms of the effects of the present invention, R⁵ is preferably an aliphatic group, an acylamino group, an aryl group, an amino group, an aliphatic oxycarbonylamino group, or an aliphatic aminocarbonyloxy group, more preferably an aliphatic group or an aryl group, most preferably an aliphatic group having 1 to 4 carbon atoms. Specifically, R⁵ may be a methyl group, an ethyl group, an isopropyl group, or the like.

In terms of the effects of the present invention, R⁶ is preferably a hydrogen atom, an aliphatic group, an aryl group, an aliphatic thio group, an arylthio group, or an aliphatic oxy group, more preferably an aliphatic group or an aliphatic thio group, most preferably an aliphatic group having 1 to 3 carbon atoms. Specifically, R⁶ may be a methyl group, or the like.

R¹ represents an aliphatic sulfonyl amino group, an aliphatic oxy group, or -CH(CN)₂. The number of carbon atoms in the aliphatic sulfonyl amino group or the aliphatic oxy group represented by R¹ and preferred specific examples thereof are the same as those in the description of the substituents represented by R⁴ to R⁶.

In terms of the effects of the present invention, R¹ is preferably an aliphatic sulfonyl amino group or -CH(CN)₂.

X, Y, and Z each represent an atom required for the formation of a five-membered aromatic heterocycle, where at least one atom of X, Y, and Z represents a nitrogen atom but both X and Y do not represent a carbon atom when Z represents a nitrogen atom.

Examples of a heterocycle with a combination of X, Y, and Z include Het-1 to Het-13 as described below. In the following formulae, R⁷ to R¹⁸ each represent a hydrogen atom or a substituent. The number of carbon atoms of the substituents represented by R⁷ to R¹⁸ and specific examples thereof are preferably the same as those in the description of substituents represented by R⁴ to R⁶.

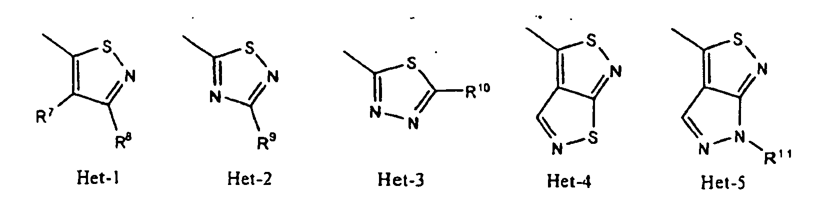

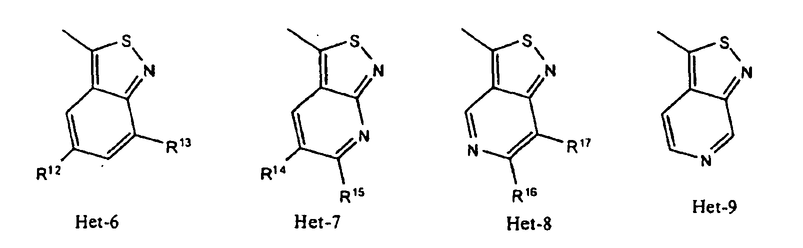

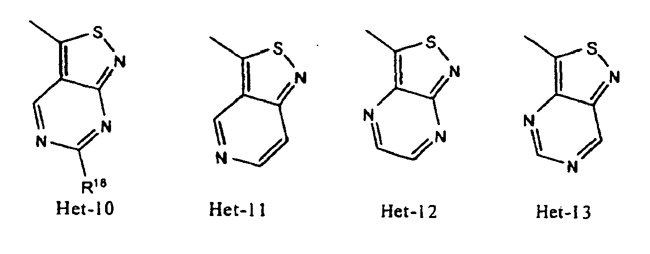

In terms of the effects of the present invention, the heterocycle with the combination of X, Y, and Z is preferably Het-1, Hct-2, Het-3, or Het-7, more preferably Het-1, Het-2, or Het-3, most preferably Hct-2 in which X is a carbon atom, Y is a nitrogen atom, and Z is a nitrogen atom.

Specific examples of the compounds represented by formula (1) are shown below. However, the present invention should not be construed as being limited to these compounds.

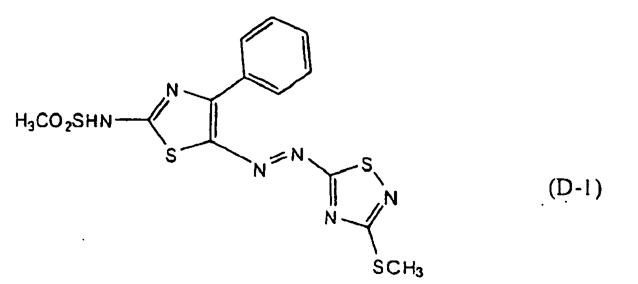

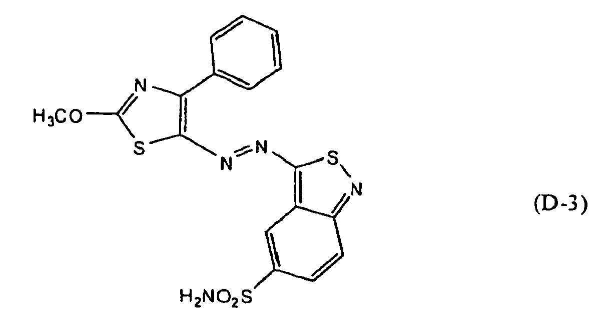

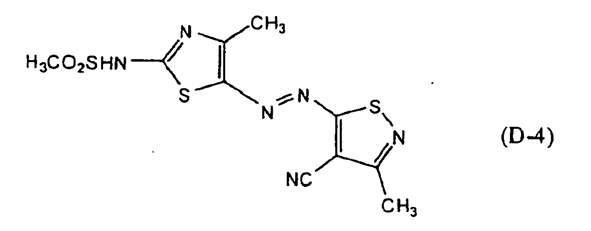

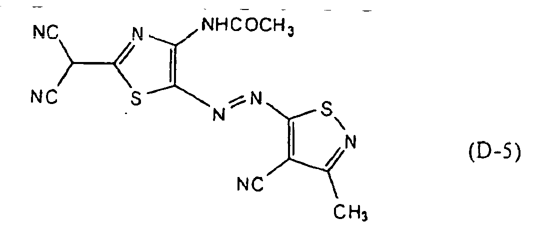

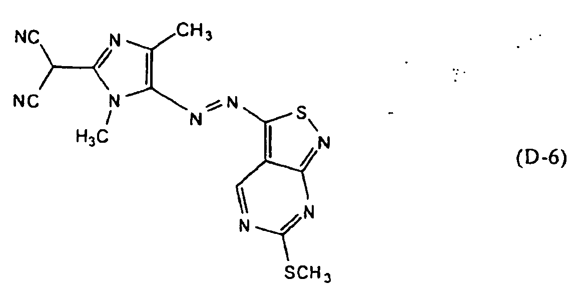

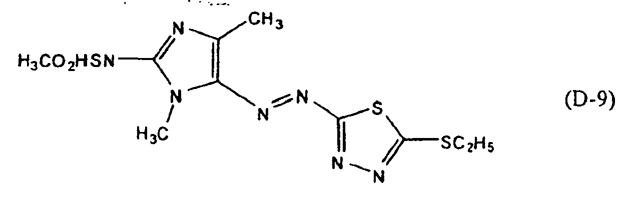

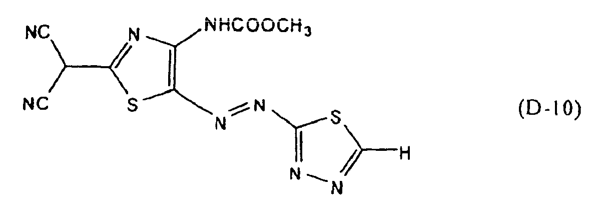

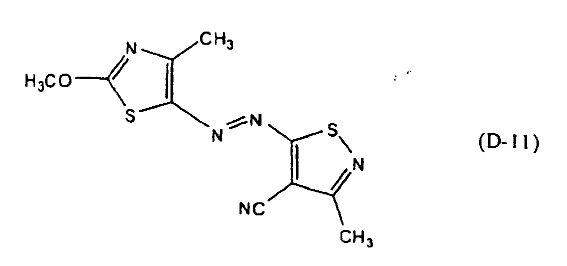

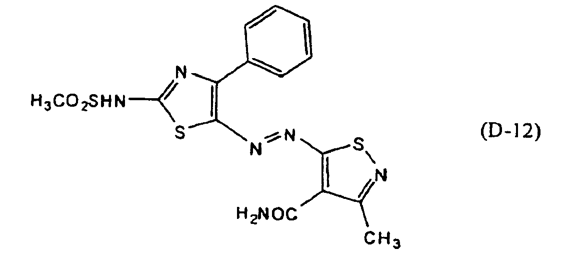

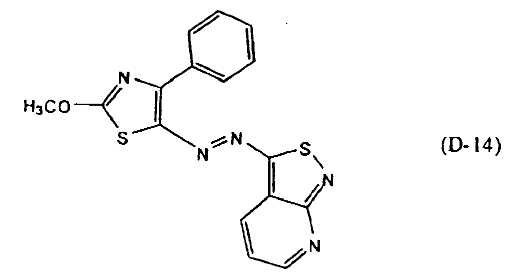

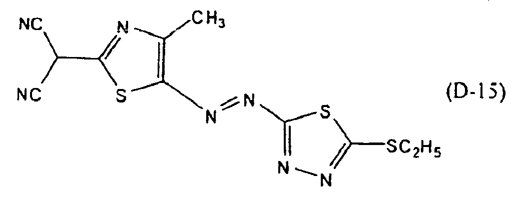

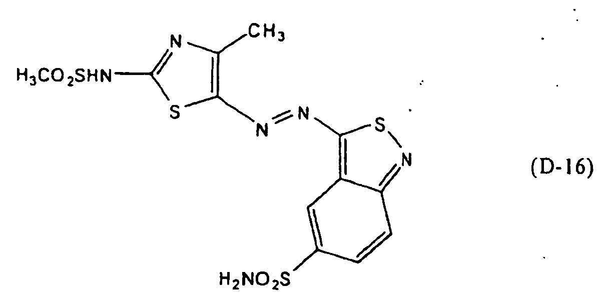

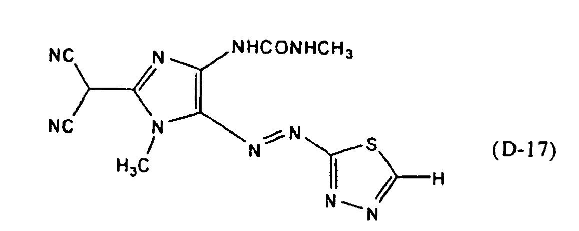

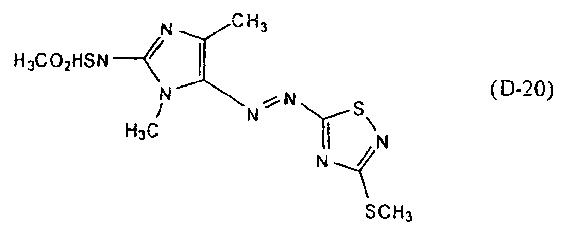

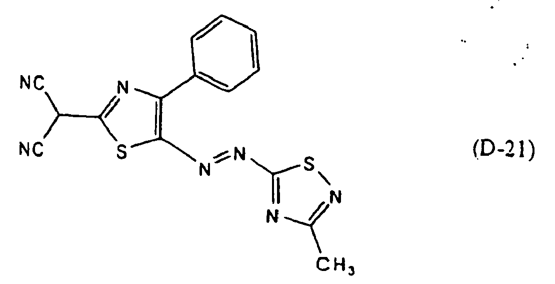

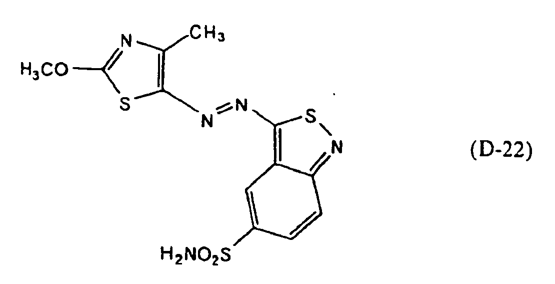

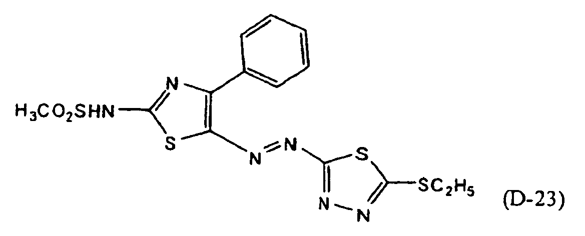

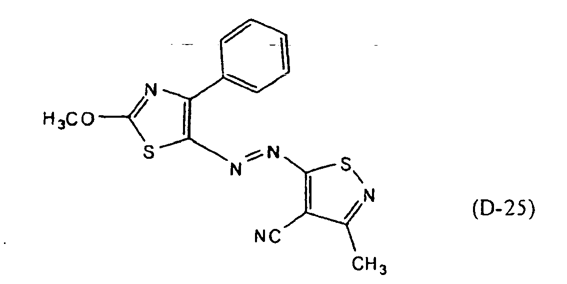

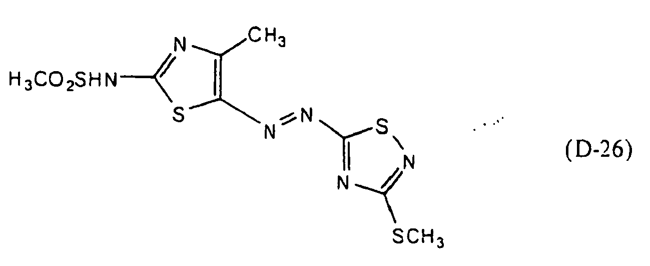

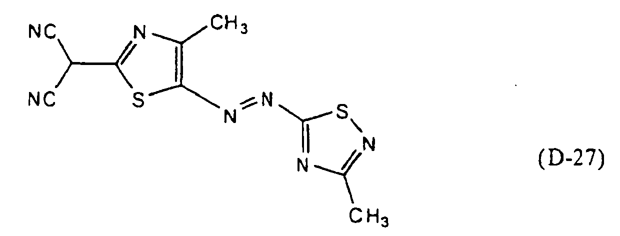

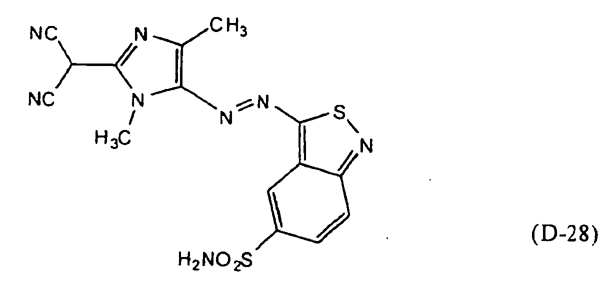

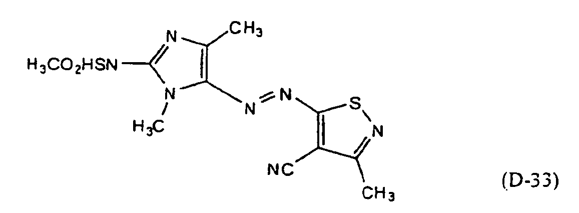

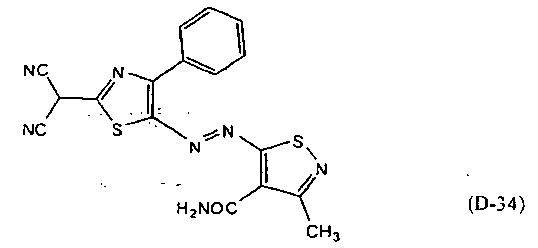

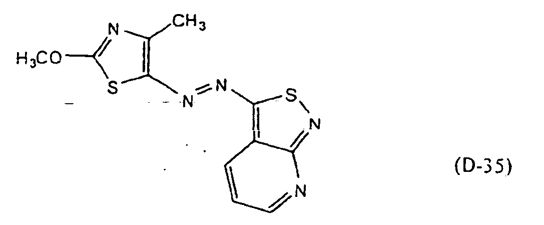

The compound represented by formula (I) can be prepared with reference to, for example, a method described in JP-A-2003-342139.

The compound represented by formula (I) can be preferably used as an azo dye. The azo dyc of the compound represented by formula (I) has the absorption maximum at a wavelength region of preferably 500 to 650 nm, more preferably 530 to 580 nm or 620 to 650 nm. In addition, such an azo dye preferably has a molar absorbance coefficient ε of 40,000 to 70,000, more preferably 55,000 to 70,000.

Examples of applications of the azo dye of the compound represented by formula (I) include: solid-state imaging device such as CCD and CMOS; color filters for recording and reproducing color images used in displays such as LCD and PDP; curable compositions for preparing such color filters; color image recording materials for forming color images; and coloring. Specifically, the applications of the compound include color filters and curable compositions for preparing such color filters, inkjet recording materials, thermal recording materials, pressure-sensitive recording materials, electrophotographic recording materials, transfer-type silver halide photosensitive materials, printing ink, recording pens, fiber-dyeing, hair-dyeing, and the like, preferably inkjet recording materials, transfer-type silver halide photosensitive materials, printing ink, hair-dyeing, and the like.

The dye (dyestuff) of the present invention can be used after being optimized to the intended application by modifying a substituent thereon to adjust the physical properties thereof, such as solubility and dispersibility. Further, the dyc (dyestuff) of the present invention can be also used in dissolved state, emulsified state, or solidified state, depending on a system where the dye (dyestuff) will be applied.

The azo dye of the present invention is a dye having a high molecular absorption coefficient as well as having excellent hue and sufficient fastness properties to light, heat, humidity, and active gas in the environment. Further, the azo compound of the present invention can be favorably used as such an azo dye.

The present invention will be described in more detail based on the following examples, but the invention is not intended to be limited thereto.

### EXAMPLES

Example-1

### [Preparation of dye (Exemplified compound D-23)]

A dye (Exemplified compound D-23) was prepared by the following process.

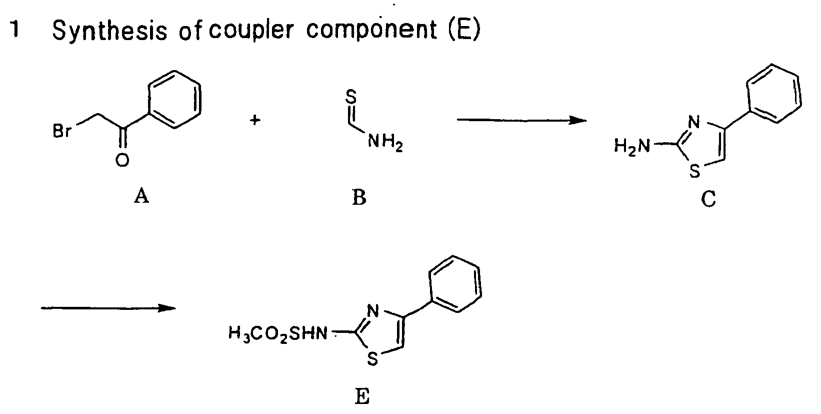

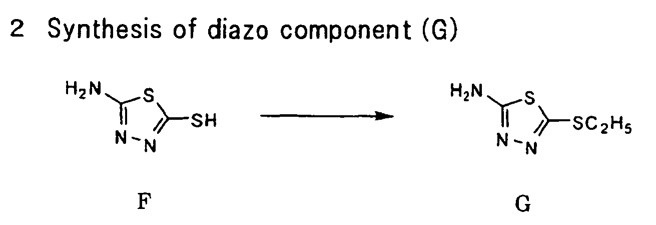

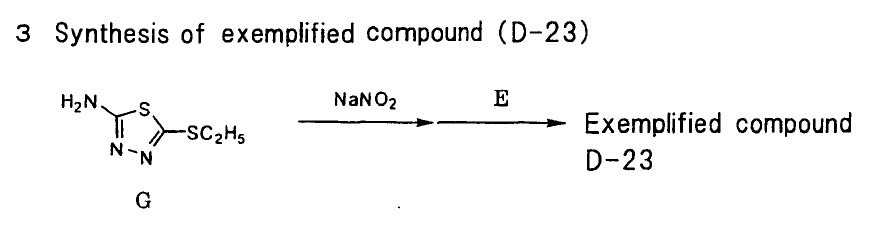

### (1) Preparation of Compound (C)

First, 16.2 g of Compound (A) (0.08 mol) and 6.2 g of Compound (B) (0.08 mol) were suspended in 80 ml of isopropyl alcohol and then stirred for 3 hours at an inner temperature of 25°C. Subsequently, 6.9 g of sodium hydrogen carbonate (0.082 mol) was dissolved in 200 ml of water, and the resultant solution was added to the above suspension. A precipitated crystal was filtrated, washed sufficiently with water, and dried. Consequently, 14.0 g of a white crystal was obtained as Compound (C) (99.3% in yield).

### (2) Preparation of Compound (E)

First, 10.0 g of Compound (C) (0.055 mol) was dissolved in 100 ml of tetrahydrofuran and then added with 18.9 g of methanesulfonyl chloride (0.165 mol). Subsequently, 8.9 g of sodium hydride (oiliness, 50 to 72% in content) was added to the mixture and then stirred for 5 hours at a reaction temperature of 65°C. The reaction solution was left standing after the addition of 10 ml of methanol, 1,000 ml of ethyl acetate, and 500 ml of a saturated salt solution. An aqueous phase was removed and an ethyl acetate phase was then washed with 500 ml of a saturated salt solution, followed by drying water with an anhydrous magnesium sulfate. After that, the filtrate obtained from the filtration of the magnesium sulfate was distilled off under reduced pressure and the resulting residue was then purified through a silica gel chromatography. Consequently, 5.5 g of a white solid substance was obtained as Compound (E) (39.3% in yield).

### (3) Preparation of Compound (G)

First, 13.3 g of Compound (F) (0.1 mol) and 20 ml of isopropyl alcohol were suspended in 15 ml of water and then dissolved with the addition of 6.6 g of 85% potassium hydroxide. Subsequently, 16.4 g of ethyl iodide (0.105 mol) was kept at a reaction temperature of 25°C or less and dropped into the solution under ice-cooling. After that, the reaction solution was stirred for 2 hours at a reaction temperature of 60°C and then added to 400 ml of cold water, followed by stirring for 30 minutes. A deposited crystal was filtrated, washed sufficiently with water, and then dried. Consequently, 15.2 g of a pale yellow crystal was obtained as Compound (G) (94.4% in yield).

### (4) Preparation of dye (Exemplified compound D-23)

First, 2.8 g of Compound (G) (0.017 mol) was dissolved in 350 ml of phosphoric acid and then gradually added with 1.3 g of sodium nitrite (0.19 mol) while being kept at an inner temperature of 5°C or less and stirred for 30 minutes. Subsequently, 4.8 g of Compound (E) (0.19 mol) was dissolved in 50 ml of acetic acid and then added to the reaction solution, followed by stirring at 10°C for 5 hours. The reaction solution was added with 2 liters of water and then stirred for 1 hour. A deposited crystal was filtrated and then washed sufficiently with water. After that, the resulting crystal was dried and then purified through silica gel column chromatography. The resulting product was crystallized with 150 ml of methanol/water = 1/1 (mixture ratio, ml) and then filtrated. The crystal thus obtained was washed with 50 ml of the above mixture solvent and then dried. Consequently, 2.8 g of an orange-yellow crystal was obtained as the exemplified compound (D-23) of the present invention (38.6% in yield).

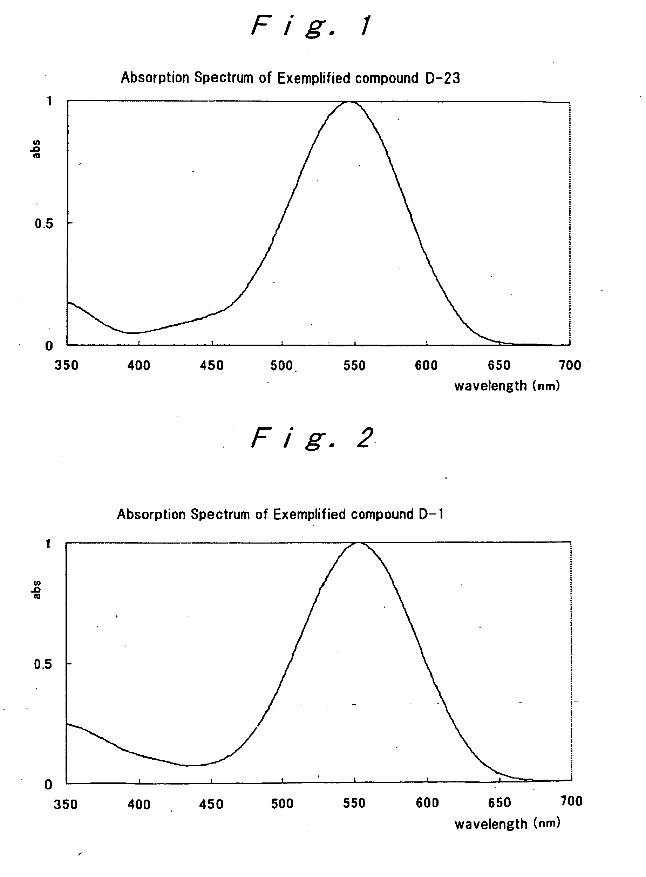

The melting point of the thus-prepared dye was 257 to 258°C. In addition, an absorption spectrum of the dye in N,N-dimethylformamide (DMF) was determined. The results arc shown in FIG. 1. As is evident from FIG 1, the maximum absorption wavelength λ max was 546.1 nm (ε = 41,200). In addition, in I7MP/water = 1/1 (mixture ratio, ml), pKa was 2.91. The dye had good hue.

### Example-2

### [Preparation of dye (Exemplified compound D-1)]

A dye (Exemplified compound D-1) was prepared by the following process.

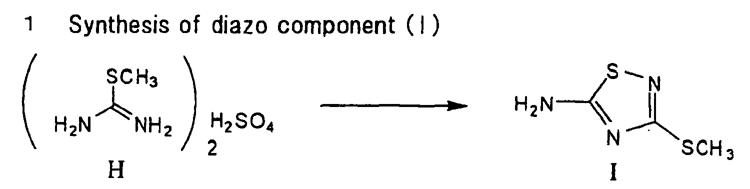

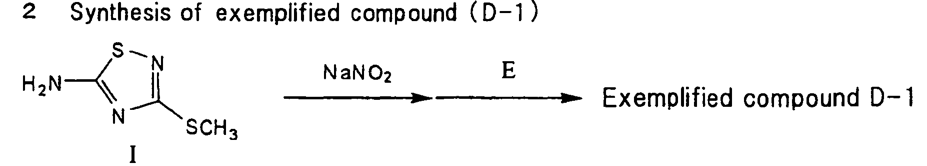

### (1) Preparation of Compound (I)

After dissolving 10.5 g of sodium thiocyanate (0.13 mol) in 100 ml of methanol, 13.9 g of Compound (H) (0.05 mol) was added to the reaction solution under ice/methanol cooling. Subsequently, 15.4 ml of triethyl amine (0.11 mol) was added to the reaction solution. After that, 14 ml of triethyl amine (0.1 mol) and 16.3 g of bromine (0.102 mol) were simultaneously dropped into the reaction solution while being kept at an inner temperature of 5°C or less. After reacting at room temperature for 2 hours, the reaction solution was added to 1,000 ml of cold water and then stirred for 30 minutes. A deposited crystal was filtrated, washed sufficiently with water, and then dried. Consequently, 10.0 g of a pale yellow crystal was obtained as Compound (I) (68% in yield).

### (2) Preparation of dye (Exemplified compound D-1)

The exemplified compound (D-1) of the present invention was prepared in a manner similar to the method described in Example 1, except that Compound (G) was replaced with Compound (1).

The melting point of the prepared dye was 242 to 244°C. In addition, an absorption spectrum of the dye in DMF was determined. The results are shown in FIG. 2. As is evident from FIG. 2, the maximum absorption wavelength λ max was 533 nm. The dye had good hue.

### Example-3

### [Preparation of dye (Exemplified compound D-21)]

A dye (Exemplified compound D-21) was prepared by the following process.

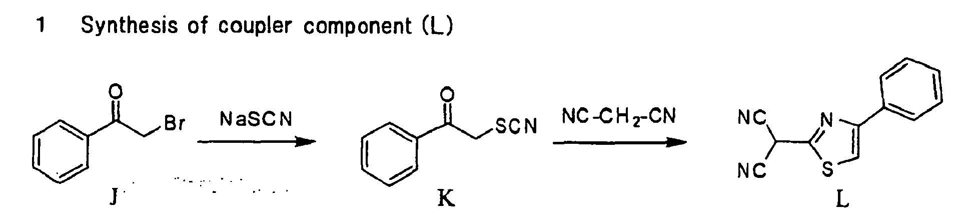

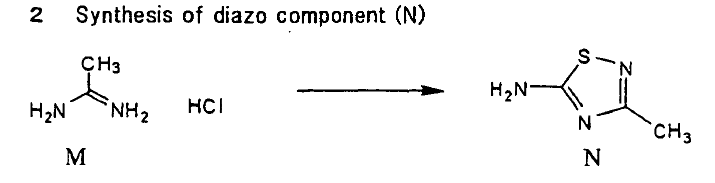

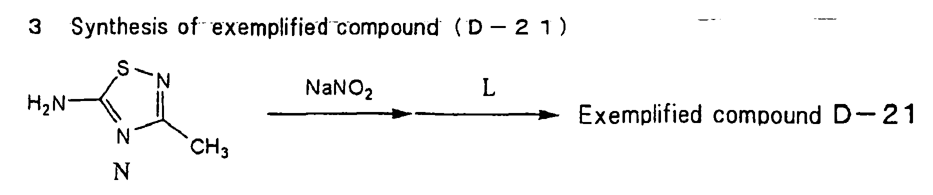

### (1) Preparation of Compound (K)

After adding 24.4 g of sodium thiocyanate (0.3 mol) to 200 ml of ethanol, the reaction solution was refluxed under heat and then added with 39.8 g of Compound (J) (0.2 mol) to react for 1 hour. After cooling down the mixture to room temperature, 400 ml of ethyl acetate and 400 ml of water were added to the mixture. Subsequently, an ethyl acetate phase and an aqueous phase were separated by a separation operation. After that, the ethyl acetate phase was distilled off under reduced pressure and 80 ml of ethanol was then added to a concentrated residue. A deposited crystal was filtrated, washed with ethanol, and then dried. Consequently, 27 g of a white crystal was obtained as Compound (K) (76% in yield).

### (2) Preparation of Compound (L)

First, 7.4 g of malononitrile (0.11 mol) and 19.9 g of Compound (K) (0.11 mol) were dissolved in 100 ml ofN,N-dimethyl acetamide, and 47 ml of triethyl amine (0.34 mol) was then dropped into the mixture at room temperature. After reacting for 1 hour at room temperature, the reaction solution was added with 300 ml of cold water and then dropped with 43 ml of 35% hydrochloric acid (0.5 mol). A deposited crystal was filtrated, washed sufficiently with water, and then dried. Consequently, 22.1 g of a pale ocher crystal was obtained as Compound (L) (87% in yield).

### (3) Preparation of Compound (N)

The exemplified compound (N) was prepared in a manner similar to the method described in Example 2, except that Compound (H) was replaced with Compound (M).

### (4) Preparation of dye (Exemplified compound D-21)

The exemplified compound (D-21) of the present invention was prepared in a manner similar to the method described in Example 1, except that Compound (G) was replaced with Compound (N) and Compound (E) was replaced with Compound (L).

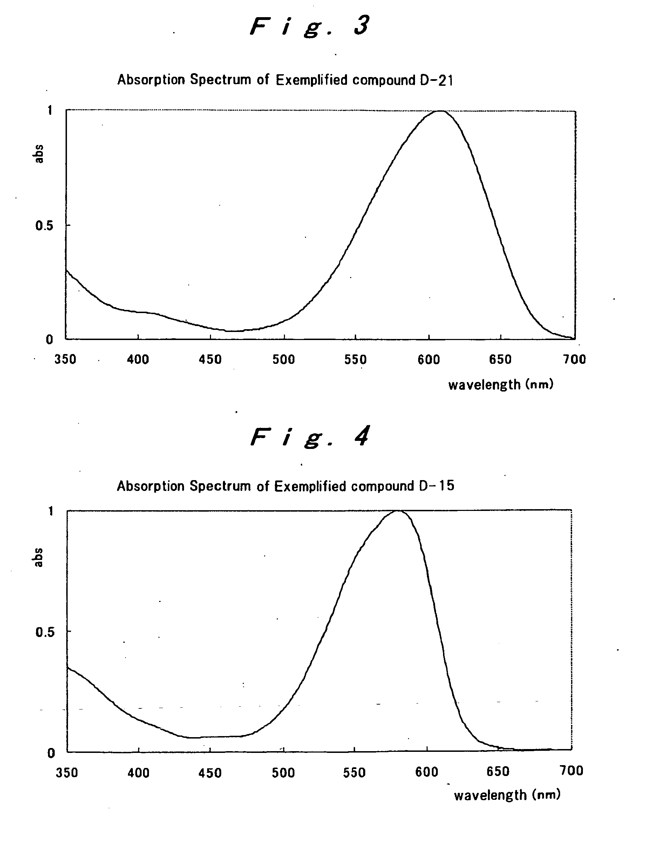

The melting point of the prepared dye was 262 to 266°C. In addition, an absorption spectrum of the dye in DMF was determined. The results are shown in FIG. 3. As is evident from FIG. 3, the maximum absorption wavelength λ max was 606 nm. The dye had good hue.

### Example-4

### [Preparation of dye (Exemplified compound D-15)]

A dye (Exemplified compound D-15) was prepared by the following process.

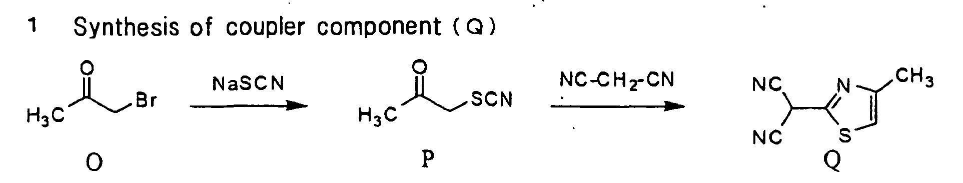

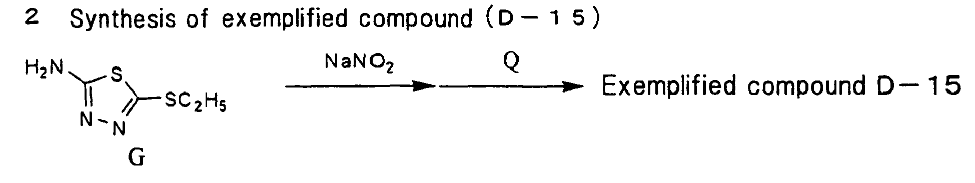

### (I) Preparation of Compound (P)

The Compound (P) was prepared in a manner similar to the method described in Example 3, except that Compound (J) was replaced with Compound (O).

### (2) Preparation of Compound (Q)

The Compound (Q) was prepared in a manner similar to the method described in Example 3, except that Compound (K) was replaced with Compound (P).

### (3) Preparation of dye (Exemplified compound D-15)

The exemplified compound (D-15) of the present invention was prepared in a manner similar to the method described in Example 3, except that Compound (E) was replaced with Compound (Q).

The melting point of the prepared dye was 235 to 237°C. In addition, an absorption spectrum of the dye in DMF was determined. The results are shown in FIG. 4. As is evident from FIG. 4, the maximum absorption wavelength λ max was 580 nm. The dye had good hue.

### Example 5

The exemplified compounds D-23, D-1, D-21, and D-15 prepared in Examples 1 to 4 were subjected to the experiment described in Example 1 of JP-A-2000-280630 to investigate the fastness properties of images. Specifically, the light fastness properties of images were investigated as follows.

### [Production of heat-sensitive transfer dye-providing material (P-1)]

A heat-resistant slipping layer was formed on one surface of a polyethylene terephthalate film with a thickness of 5 µm, and the film was being served as a support. On the side of the support opposite to the heat-resistant slipping layer side, a coating composition (1) of a dye-providing layer with a composition as described below was applied by a gravure coaler so as to be 0.6 µm in thickness after drying, to give a heat-sensitive transfer dye-providing material (P-1) (hereinafter, also simply referred to as dye-providing material).

### <Coating composition (1) of dye-providing layer>

| | |
|---|---|
| Compound D-23 | 10 g |
| Polyvinyl butyral (trade name: DENKA BUTYRAL 5000A, manufactured by Denki Kagaku Kogyo Kabushiki Kaisha) | 10 g |
| Silicone oil (trade name: KF-96, manufactured by Shin-Etsu Chemical Co., Ltd.) | 0.2 g |
| Polyisocyanate (trade name: TAKENATE D110N, manufactured by Takeda Pharmaceutical Company Limited.) | 0.5 g |
| Methyl ethyl ketone | 100 ml |
| Toluene | 80 ml |

### [Production of heat-sensitive transfer image-receiving material (1)]

A sheet of laminating-type synthetic paper with a thickness of 150 µm was used as a support. A coating composition (1) of a receptive layer as shown in the below was applied on one surface of the support using a wire bar coater so as to be 5 µm in thickness after drying. Consequently, a heat-sensitive transfer image-receiving material (1) (hereinafter, also simply referred to as image-receiving material) was obtained. The drying was carried out in an oven at 80°C for 1 hour, after pre-drying with a dryer.

### <Coating composition (1) of a receptive layer>

| | |
|---|---|
| Dye-fixing agent: A-9 (trade name: AEA, manufactured by Sankyo Co., Ltd.) | 26g |
| Polyisocyanate (trade name: KP-90, manufactured by Dainippon Ink and Chemicals, Incorporated) | 4 g |
| Amino-modified silicone oil (trade name: KP-857, manufactured by Shin-Etsu Silicone Co., Ltd.) | 0.5 g |
| Methyl ethyl ketone | 100 ml |
| Toluene | 50 ml |
| Cyclobexanone | 10 ml |

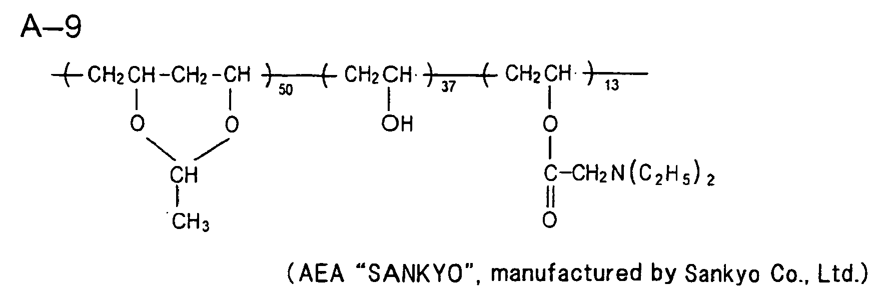

The heat-sensitive transfer dye-providing material (D-1) obtained as described above was used to laminate the dye-providing layer and a receptive layer of the heat-sensitive transfer image-receiving material (1), to bring those in contact with each other. Subsequently, from the side of the support of the heat-sensitive transfer dye-providing material, heating was performed using a thermal head under the conditions in which the thermal head had an output of 0.25 W/dot, a pulse width of 0.1 to 10 msec, and a dot density of 6 dots/mm², to place the dye on the receptive layer of the image-receiving material to make an image-like pattern thereon. Consequently, clear image recording without the transferal irregularity was obtained.

A portion (Dmax portion) where the density of the recorded image-receiving material obtained at this time was saturated was subjected to a measurement with a reflecting densitometer (status-A filter built-in type, manufactured by X Rite Inc.) and the maximum transfer density of the image was measured.

Subsequently, the recorded image-receiving material was irradiated for 7 days with light at 17,000 lx from a fluorescent lamp, and the light-fastness properties of the image were then investigated. The portion showing a reflection density of 1.0 was subjected to a reflection density measurement after the test, and the stability thereof was evaluated by the persistence (%) of the reflection density after the test to the refection density 1.0 before the test.

In addition, the thermal stability of the image was evaluated after storing in an oven at 60°C for 1 week. As a result, the material using the compound D-23 of the present invention was stable because no decrease in density and no color change were observed.

Further, the recorded image-receiving material was stored in an oven at 60°C for 2 weeks and the degree of image-bleeding was then observed. The determination was performed on the basis of the following criteria: good (o): no substantial change of an image from one before the storage; allowable (Δ): slightly bled; (×): extremely bled and blurred. Any image formed with the compound D-23 of the present invention did not show any substantial change, compared with one before the storage (o).

As is evident from the above results, the azo compound of the present invention provides an image with high transfer density (with sufficient dyeing properties and migration properties) and a clear image with excellent fastness properties to light and heat, as well as no substantial image blur with the lapse of time.

Coating compositions P-2 to P-4 of dye-providing layers were prepared in the same manner as one described above, except that any of the compounds D-1, D-21, and D-15 was used instead of the compound D-23, and then each of those was examined as described above. As a result, all of the compounds D-1, D-21, and D-15 showed good dyeing properties, migration properties, fastness properties just as in the case of the compound D-23.

## Claims

1. An azo dye of formula (I): 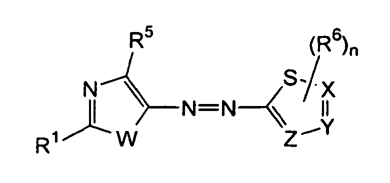 wherein
R¹ is aliphatic sulfonyl amino, aliphatic oxy or -CH(CN)₂;
W is S or -N(R⁴)-, with R⁴ being a substituent;
R⁵ is a substituent;
X, Y, and Z each represent an atom required for the formation of a five-membered aromatic heterocycle, where at least one of X, Y, and Z is N, and if Z is N, X and Y are not both C;
R⁶ is H or a substituent; and
n is 1 or 2, and if n is 2, the two R⁶ may together form an aromatic or heteroaromatic ring.

2. The azo dye of claim 1, which is of the formula

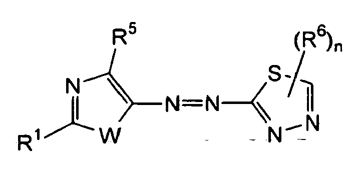

3. The azo dye of claim 1 or 2, wherein R⁵ is an aliphatic group.

4. The azo dye of any of claims 1-3, which is of the formula 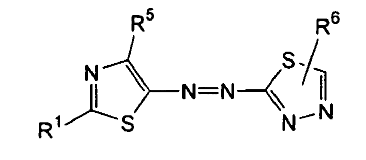 wherein R¹ is aliphatic sulfonyl amino, R⁵ is an aliphatic group, and R⁶ is an aliphatic group.

## Patentansprüche

1. Azofarbstoff der Formel (I): 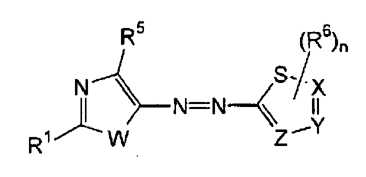 worin
R¹ aliphatisches Sulfonylamino, aliphatisches Oxy oder -CH(CN)₂ ist;
W S oder -N(R⁴)- ist, wobei R⁴ ein Substituent ist; R⁵ ein Substituent ist;
X, Y und Z jeweils ein Atom darstellen, das zur Bildung eines 5-gliedrigen aromatischen Heterocyclus erforderlich ist, wobei mindestens eines von X, Y und Z N ist, und wenn Z N ist, X und Y nicht beide C sind;
R⁶ H oder ein Substituent ist; und
n 1 oder 2 ist, und wenn n 2 ist, die zwei R⁶ zusammen einen aromatischen oder heteroaromatischen Ring bilden können.

2. Azofarbstoff gemäss Anspruch 1, der die Formel 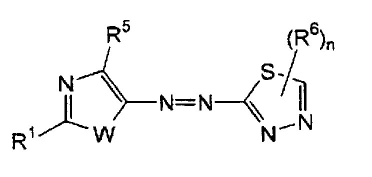 aufweist.

3. Azofarbstoff gemäss Anspruch 1 oder 2, worin R⁵ eine aliphatische Gruppe ist.

4. Azofarbstoff gemäss einem der Ansprüche 1 bis 3, der die Formel 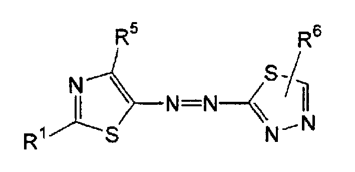 aufweist, worin R¹ aliphatisches Sulfonylamino ist, R⁵ eine aliphatische Gruppe ist und R⁶ eine aliphatische Gruppe ist.

## Revendications

1. Colorant azoïque de formule (I) : 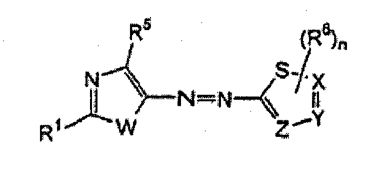 dans laquelle
R¹ est un groupe amino sulfonyle aliphatique, oxy aliphatique ou -CH(CN)₂ ;
W est un S ou un groupe -N(R⁴)-, avec R⁴ étant un substituant ;
R⁵ est un substituant ;
X, Y et Z représentent chacun un atome nécessaire pour la formation d'un hétérocycle aromatique à cinq chaînons, où au moins l'un de X, Y, et Z est un N, et si Z est un N, X et Y ne sont pas tous deux un C ;
R⁶ est un H ou un substituant ; et
n vaut 1 ou 2, et si n vaut 2, les deux R⁶ peuvent former ensemble un cycle aromatique ou hétéro-aromatique.

2. Colorant azoïque selon la revendication 1, qui est de la formule

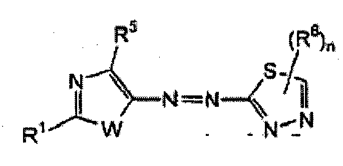

3. Colorant azoïque selon la revendication 1 ou 2, dans lequel R⁵ est un groupe aliphatique.

4. Colorant azoïque selon l'une quelconque des revendications 1 à 3, qui est de la formule 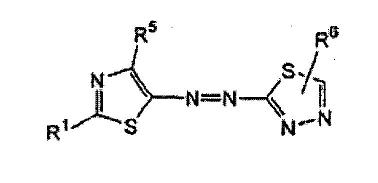 dans laquelle R¹ est un groupe amino sulfonyle aliphatique, R⁵ est un groupe aliphatique, et R⁶ est un groupe aliphatique.
